(19) Europäisches Patentamt
European Patent Office
Office européen des brevets

(11) EP 0 636 651 B1

(12) # EUROPÄISCHE PATENTSCHRIFT

(45) Veröffentlichungstag und Bekanntmachung des Hinweises auf die Patenterteilung:
**19.05.1999 Patentblatt 1999/20**

(51) Int Cl.[6]: **C08L 33/06**, C08L 33/14, C08L 29/02

(21) Anmeldenummer: **94111278.1**

(22) Anmeldetag: **20.07.1994**

(54) **Vernetztes Polymerisat**

Crosslinked polymer

Polymère réticulé

(84) Benannte Vertragsstaaten:
**AT BE CH DE DK ES FR GB IT LI NL SE**

(30) Priorität: **31.07.1993 DE 4325776**

(43) Veröffentlichungstag der Anmeldung:
**01.02.1995 Patentblatt 1995/05**

(73) Patentinhaber: **Röhm GmbH
64293 Darmstadt (DE)**

(72) Erfinder:
- **Kaufmann, Marita, Dr.
D-64331 Weiterstadt (DE)**
- **Kerscher, Volker, Dr.
D-64354 Reinheim (DE)**
- **Siol, Werner, Dr.
D-64297 Darmstadt (DE)**
- **Fölsch, Karl Josef, Dr.
D-55128 Mainz (DE)**

(56) Entgegenhaltungen:
**GB-A- 956 646** **GB-A- 2 212 166**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 636 651 B1

## Beschreibung

Die Erfindung betrifft vernetzte organische Polymerisate, die durch Umsetzung von wechselseitig reaktionsfähigen Seitengruppen oder durch Umsetzung eines Polymerisats mit einem niedermolekularen Vernetzungsmittel unter Bildung von Vernetzungsbrücken erhalten werden. Darunter werden kurze Molekülketten verstanden, die zwischen den Hauptketten zweier Polymermoleküle angeordnet und kovalent mit diesen verbunden sind. Als reaktionsfähige Seitengruppen bzw. seitenständige Gruppen werden die an der Bildung der Vernetzungsbrücken beteiligten Gruppen verstanden, die weder Bestandteil der Hauptkette des Polymerisats noch direkt an diese gebunden sind.

Stand der Technik

Die technisch gebräuchlichen Verfahren zur Vernetzung von Polymerisaten beruhen überwiegend auf der Reaktion von Formaldehyd mit Hydroxyl- oder Aminogruppen, z.B. in Form von Aminoplastharzen oder von N-Methylolamidgruppen enthaltenden Acrylpolymeren. Wegen der Befürchtung einer gesundheitsschädlichen Wirkung von Formaldehyd wird seit langem versucht, formaldehydfreie Vernetzungssysteme zu entwickeln. Obwohl dabei Erfolge erzielt wurden, besteht weiterhin Bedarf an Vernetzungsverfahren, die unter ähnlichen Bedingungen zu gleichguter Vernetzung führen wie die bekannten Formaldehyd-Systeme. Der erreichte Vernetzungsgrad von Acrylpolymeren läßt sich durch Quellung in Tetrahydrofuran ermitteln. Dabei werden die Gewichtszunahme während der Quellung und der Gewichtsverlust durch Herauslösen unvernetzter Polymerisatanteile berücksichtigt; beide Werte nehmen mit zunehmender Vernetzung ab.

Aus der US-A 3,200,099 ist ein Vernetzungsverfahren bekannt, bei dem hydroxylgruppenhaltige Polymerisate mit Aldehyden oder davon abgeleiteten Acetalen unter Bildung von Acetalbrücken vernetzt werden. Als Vernetzungsmittel werden überwiegend Formaldehyd bzw. die davon abgeleiteten Formale verwendet, jedoch können stattdessen auch Acrolein, dessen Acetal oder das Dimethylketal des Acetons eingesetzt werden. Über die Umacetalisierung als Vernetzungsprinzip bei der Lackfilmbildung berichten P. Klostermann, P. Günther und H.G. Stolzenbach in "Farbe und Lack", 94. Jg., 1988, S.425-9. Die entstehenden Acetalbrücken sind jedoch stärker säureempfindlich als vernetzte Aminoplastharze oder formaldehydvernetzte Acrylamid-Copolymerisate.

Polyvinylalkohol läßt sich mit Glutardialdehyd oder Epichlorhydrin vernetzen und mit Glyoxylsäure zu einem Ionenaustauscher verarbeiten (EP-A 24 055). Die Anwendungsgebiete von vernetztem Polyvinylalkohol sind eng begrenzt; daher handelt es sich hier nicht um ein universell einsetzbares Vernetzungsverfahren. Hydroxylgruppenhaltige Polymerisate können weiterhin mit Diisocyanaten oder Bisepoxiden vernetzt werden. Diese Vernetzungsmittel haben jedoch verschiedene Nachteile; sie sind zum Teil giftig, erfordern drastische Umsetzungsbedingungen oder verändern den chemischen Charakter des eingesetzten Polymerisats nachhaltig.

Selbstvernetzende Copolymerisate von Acrylamidobutyraldehyd-diethylacetal oder ähnlichen polymerisierbaren Amidoacetalen oder -ketalen sind aus EP-A 201 693 bekannt. Sie können auch unter Bildung von Dioxolan- oder Dioxanstrukturen mit Cellulose oder Polyvinylalkohol reagieren. Die Vernetzung der Copolymerisate unter der Wirkung saurer Katalysatoren mit sich selbst oder mit Diolgruppen von Cellulose oder Polyvinylalkohol erfordert Temperaturen von etwa 150°C.

Aufgabe und Lösung

Der Erfindung liegt die Aufgabe zugrunde, Polymerisate mit seitenständigen Hydroxylgruppen ohne Verwendung formaldehydhaltiger Vernetzungsmittel und ohne die Nachteile anderer bekannter Vernetzungsmittel zu vernetzen, ohne dabei den chemischen Charakter - abgesehen von der Veränderung der Löslichkeit oder Schmelzbarkeit - grundlegend zu verändern.

Die Aufgabe wird von den Polymerisaten gemäß Anspruch 1 gelöst. Die gefundene Lösung beruht auf der Bildung von Vernetzungsbrücken mit einer 1,3-Dioxan- oder 1,3-Dioxolan-Gruppe, jedoch ist nicht auszuschließen, daß wenigstens teilweise auch Vernetzungsbrücken mit anderen, gegebenenfalls linearen Strukturen entstehen. Die Vernetzungsbrücken haben in der Regel die Struktur

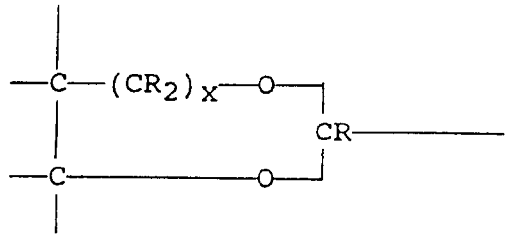

worin R Wasserstoffatome oder gleiche oder verschiedene organische Reste und x = 0 oder 1 sind. Diese Gruppen sind als cyclische Acetale eines 1,2- oder 1,3-Diols mit einem Aldehyd bzw. als cyclische Ketale eines solchen Diols mit einem Keton aufzufassen. Unter den Carbonylverbindungen, die gemäß der Erfindung cyclische Acetale oder Ketale bilden, haben die Aldehyde und ihre Derivate eine größere Bedeutung als die Ketone und deren Derivate. Daher wird die Acetalbildung bzw. Acetalisierung der Aldehyde im nachfolgenden vorrangig behandelt, jedoch gelten alle derartigen Aussagen in entsprechender Weise für die Bildung von Ketalen bzw. die Ketalisierung.

Acetale entstehen unter der Einwirkung saurer Katalysatoren durch die Reaktion einer seitenständigen Carbonylgruppe mit einer seitenständigen 1,2- oder 1,3-Diolgruppe durch cyclische Acetalbildung. Im allgemeinen zeichnen sich die entstehenden Dioxolan- oder Dioxangruppen vor den linear strukturierten Acetalen und Halbacetalen durch eine höhere chemische Beständigkeit, beispielsweise gegen hydrolytische Spaltung unter der Einwirkung von Säuren aus.

Durch Acetalbildung geschützte Diole oder Carbonylverbindungen zeigen oft die gleiche Reaktionsfähigkeit wie die entsprechenden ungeschützten Gruppen. Durch Umacetalisierung gehen die seitenständigen in vernetzende Dioxan- oder Dioxolangruppen über. So können beim Verfahren der Erfindung aus acetalisierten Diolen, wie

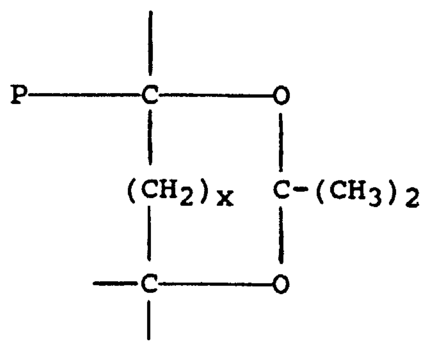

und acetalisierten Carbonylverbindungen, wie

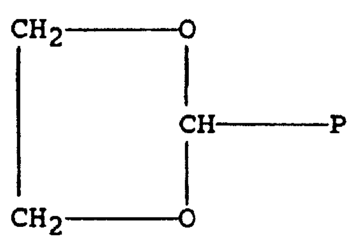

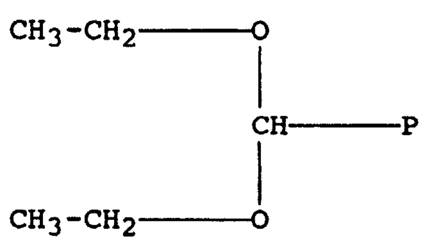

vernetzende Dioxolan- oder Dioxanbrücken gebildet werden, wobei P jeweils die zu vernetzende Polymerhauptkette bezeichnet. Daher werden nachfolgend unter Diolen bzw. Carbonylverbindungen stets auch die entsprechenden geschützten Derivate verstanden.

Ziel der erfindungsgemäßen Reaktion ist die intermolekulare Vernetzung zwischen Polymermolekülketten, von denen eine die Diolgruppe und die andere die Carbonylgruppe als Seitenkette trägt. In der Regel wird jedes Polymermolekül mit einer Vielzahl von anderen Polymermolekülen durch Vernetzungsbrücken verbunden, so daß ein dreidimensionales Netzwerk entsteht, worin jedes ursprüngliche Polymermolekül mit mehreren anderen Polymermolekülen verknüpft ist. Enthalten beide Polymerketten sowohl Carbonyl- als auch Diolgruppen, entstehen unvermeidlich gleichzeitig intramolekulare Vernetzungsbrücken.

Die seitenständige Carbonylgruppe und die seitenständige Diolgruppe können Bestandteile des gleichen Polymerisats sein, so daß dieses bei der Reaktion der Gruppen in sich vernetzt (Beispiele der Gruppen d, e, i,j). Sie können aber auch Bestandteile verschieden zusammengesetzter Polymerisate sein, so daß ein Gemisch dieser Polymerisate vernetzbar ist (Beispiele der Gruppen b, c).

Eine Vernetzung gemäß der Erfindung ist jedoch auch dann möglich, wenn das Ausgangspolymerisat nur Diolgruppen oder nur Carbonylgruppen enthält. In diesem Falle entstehen Vernetzungsbrücken erfindungsgemäß durch Umsetzung von reaktiven Seitengruppen des Polymerisats mit komplementär reaktiven Gruppen eines niedermolekularen, wenigstens difunktionellen Vernetzungsmittels.

Beispielsweise kann ein Teil der seitenständigen Diolgruppen eines Polymerisats mit einer Bis-Carbonyl-Verbindung, wie Glutardialdehyd, unter Bildung von zwei Dioxan- oder Dioxolangruppen reagieren. Diese Umsetzung erfolgt in zwei Schritten; beim ersten Schritt setzt sich eine diolgruppenhaltige Seitenkette mit einer der Carbonylgruppen des Vernetzungsmittels um, so daß die Seitengruppe entsprechend verlängert wird und die andere Carbonylgruppe des reagierenden Vernetzungsmittelmoleküls als neue Endgruppe trägt. Diese kann nun im zweiten Schritt mit einer anderen diolgruppenhaltigen Seitenkette reagieren, wodurch die Vernetzungsbrücke geschlossen wird. Der zweite Schritt entspricht völlig dem zuerst beschriebenen Vernetzungsmechanismus von Polymeren mit wechselseitig reaktiven Seitengruppen, wobei hier die reaktive Seitenkette erst durch Umsetzung der diolgruppenhaltigen Seitenkette entsteht.

Das Entsprechende gilt in dem umgekehrten Falle, daß das Ausgangspolymerisat nur Carbonylgruppen enthält und ein Teil von diesen mit einem Bis-Diol umgesetzt werden, wobei eine Seitenkette mit endständiger Diolgruppe gebildet wird. Diese vernetzt dann durch Reaktion mit einer der ursprünglichen Carbonylgruppen.

Die Vernetzung tritt in manchen Fällen schon bei Raumtemperatur oder bei wenig erhöhter Temperatur ein. In diesen Fällen hat das erfindungsgemäße Vernetzungssystem den Vorteil, daß die Vernetzung in Anwesenheit des sauren Katalysators durch Zugabe des niedermolekularen Vernetzungsmittels in Gang gesetzt werden kann. Die Vernetzung kann jedoch auch bei beiden Verfahrensarten durch Zugabe des Katalysators ausgelöst werden. Tritt eine zügige Vernetzung erst bei erhöhten Temperaturen ein, kann das vernetzungsfähige System mit allen erforderlichen Bestandteilen bei niedriger Temperatur gelagert und die Vernetzung durch Erwärmen ausgelöst werden. Die Vernetzungsreaktion wird mit Vorteil oberhalb der Erweichungstemperatur der Polymerisate, insbesondere bei Temperaturen über 100°C, vorzugsweise 120 bis 150°C, durchgeführt.

Ein Vorteil des erfindungsgemäßen Vernetzungssystems, der es der Vernetzung mittels N-Methylolacrylamiden vergleichbar macht, liegt in dem geringen Bedarf an vernetzungsfähigen Gruppen. In der Regel genügen Anteile der ungesättigten Monomeren mit Diol- und mit Carbonylseitenketten von jeweils etwa 1 bis 20 Gew.-%, vorzugsweise von 2 bis 10 Gew.-%, bezogen auf das Polymerisatgewicht, um eine ausreichende Vernetzung zu erreichen. Die Hauptmonomeren der Polymerisate können daher überwiegend entsprechend den Anforderungen des vorgesehenen Einsatzgebietes gewählt werden, so daß sie wahlweise hart und spröde oder weich und elastisch, hydrophil oder hydrophob und auf jeden gewünschten Zwischenwert dieser Eigenschaften eingestellt werden können. Das Vernetzungssystem läßt sich gegebenenfalls durch Acetalisierung dem jeweils gewünschten Eigenschaftsbild anpassen.

Herstellung der Polymerisate

Die erfindungsgemäß zu vernetzenden Polymerisate werden bevorzugt durch radikalische Polymerisation aus äthylenisch ungesättigten Monomeren erzeugt, die wenigstens zum Teil Diol- bzw. Carbonylgruppen - gegebenenfalls in geschützter Form - tragen.

Äthylenisch ungesättigte, radikalisch polymerisierbare Monomere mit einer seitenständigen 1,2- oder 1,3-Diolgruppe haben die Struktur

$$CH_2=CR'\text{-}A\text{-}CR(OH)\text{-}(CR_2)_x\text{-}CR_2\text{-}OH,$$

worin A eine zweiwertige organische Gruppe mit aktivierender Wirkung auf die benachbarte Doppelbindung, R und R' gleiche oder verschiedene einwertige organische Reste, vorzugsweise niedere Alkylreste oder Wasserstoffatome, und x = 0 oder 1 bedeuten. Bevorzugt sind Acryl- und/oder Methacrylverbindungen, in denen R' = H oder $CH_3$- und A = $-CO\text{-}O\text{-}(CR_2)_y$- oder $-CO\text{-}NR\text{-}(CR_2)_y$- sind, wobei y eine ganze Zahl von 1 bis 4 ist. Besonders bevorzugt sind Ester der Acryl- und/oder Methacrylsäure der Struktur

$$CH_2=CR''\text{-}CO\text{-}O\text{-}(CH_2)_z\text{-}CH(OH)\text{-}CH_2\text{-}OH$$

oder deren mit Aceton gebildete Ketale

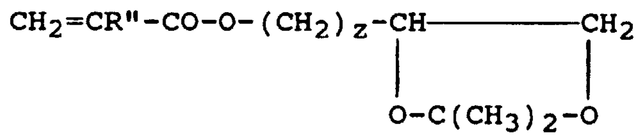

worin z = 1 bis 4 und R" = H- oder $CH_3$- ist, sowie

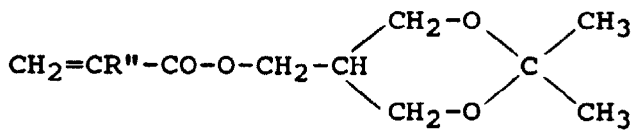

Äthylenisch ungesättigte, radikalisch polymerisierbare Monomere mit Carbonylgruppen haben die Struktur

$$CH_2{=}CR\text{-}B\text{-}CO\text{-}R$$

bzw. in geschützter Form die Struktur

$$CH_2{=}CR\text{-}B\text{-}C(OR')_2\text{-}R$$

worin R ein Wasserstoffatom oder ein gegebenenfalls substituierter Kohlenwasserstoffrest, B ein zweiwertiger organischer Rest und R' niedere Alkylreste oder zusammengenommen eine Alkylengruppe, insbesondere eine Ethylengruppe bedeuten.

Bevorzugt sind Ester und Amide der Acryl- und/oder Methacrylsäure der Struktur

$$CH_2{=}CR''\text{-}CO\text{-}O\text{-}CH_2\text{-}CH_2\text{-}CH(O\text{-}CH_3)_2$$

$$CH_2{=}CR''\text{-}CO\text{-}O\text{-}CH_2\text{-}CH_2\text{-}CH(O\text{-}C_2H_5)_2$$

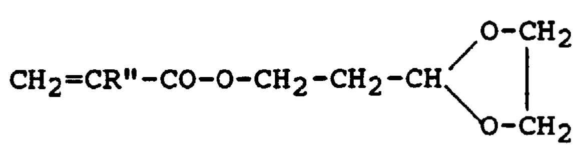

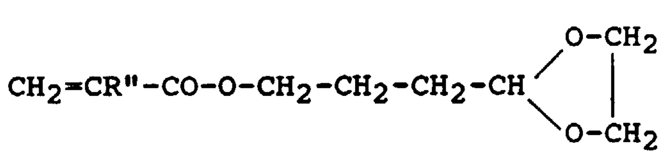

$$CH_2{=}CR''\text{-}CO\text{-}O\text{-}CH_2\text{-}CH(O\text{-}CH_3)_2$$

$$CH_2{=}CR''\text{-}CO\text{-}O\text{-}CH_2\text{-}CH(O\text{-}C_2H_5)_2$$

$$CH_2=CR''-CO-O-C_6H_4-CHO$$

$$CH_2=CR''-CO-O-(CH_2)_2-O-CO-CH_2-CO-CH_3$$

$$CH_2=CR''-CO-NH-(CH_2)_{1-3}-CH(OR)_2$$

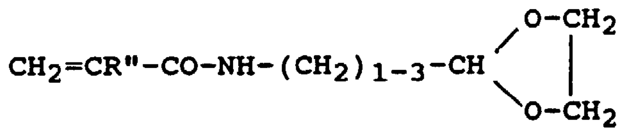

wobei jeweils R" = H- oder $CH_3$- ist.

Der Hauptteil der vernetzbaren Polymerisate wird von anderen äthylenisch ungesättigten, radikalisch polymerisierbaren Monomeren gebildet, deren Auswahl und mengenmäßige Zusammensetzung sich nach bekannten Grundsätzen zur Herstellung von technischen Kunststoffen richtet. Harte und spröde Polymerisate mit Erweichungstemperaturen über 60°C entstehen bei der Polymerisation von Methyl-, Ethyl-, Isopropyl-, t-Butyl- oder Cyclohexylmethacrylat, Acryl- und/oder Methacrylnitril, Vinylchlorid, Styrol, alpha-Methylstyrol oder Vinyltoluol. Weiche und elastische Polymerisate mit Erweichungstemperaturen unter 0°C entstehen bei der Polymerisation von Alkylacrylaten, höheren Alkylmethacrylaten mit 6 bis 20 Kohlenstoffatomen im Alkylrest oder Ethylen. Dazwischen liegende Eigenschaften haben Polymerisate von Vinylacetat und anderen Fettsäurevinylestern, von n-Butylmethacrylat oder Methylacrylat. Hydrophile Eigenschaften verleihen Acryl- und/oder Methacrylsäure, deren Alkalisalze, Hydroxyalkyl-acrylate und -methacrylate, Dialkylaminoalkylester und Dialkylaminoalkylamide der Acryl- und/oder Methacrylsäure, deren Salze mit Mineralsäuren oder deren Quaternierungsprodukte. Hydrophobe Eigenschaften werden durch Monomere mit aromatischen Resten, wie Styrol, oder mit höheren aliphatischen Resten, wie $C_8$-$C_{18}$-Alkylacrylaten und - methacrylaten gefördert. Die Eigenschaften der Copolymerisate liegen im allgemeinen zwischen denen der Homopolymerisate, so daß sich eine große Vielfalt von Polymerisateigenschaften gezielt einstellen läßt. Häufig lassen sich bekannte vernetzbare Polymerisate, die N-Methylolacrylamid oder - methacrylamid als vernetzende Monomere enthalten, als technische Vorbilder heranziehen und deren Eigenschaften durch Austausch des Vernetzungssystems auf die Polymerisate gemäß der Erfindung übertragen.

Das entsprechende gilt für die Herstellungsverfahren. Die gebräuchlichen Methoden der radikalischen Polymerisation in Substanz, in wäßriger Suspension oder Dispersion, in organischer Lösung oder Dispersion lassen sich entsprechend anwenden. Dabei ist darauf zu achten, daß die funktionellen Gruppen des Vernetzungssystems nicht in unerwünschter Weise den Ablauf der radikalischen Polymerisation beeinflussen. Diese Gefahr ist bei geschützten Diolen und Carbonylverbindungen geringer als bei den ungeschützten Verbindungen, so daß erstere bevorzugt verwendet werden.

Die Polymerisation wird vorzugsweise in einem Temperaturbereich ausgeführt, bei dem die Vernetzungsreaktion noch nicht in bedeutendem Umfang eintritt. Sie kann auch dadurch zurückgehalten werden, daß saure Katalysatoren, die die Vernetzung beschleunigen, während der Polymerisation ferngehalten werden. Bevorzugte Polymerisationstemperaturen liegen zwischen 20 und 100°C.

Das Vernetzungsverfahren

läuft in Gegenwart eines sauren Katalysators ab; geeignet sind starke mineralische oder organische Säuren oder saure Salze, wie Chlorwasserstoff, Schwefelsäure, Natriumhydrogensulfat, Perchlorsäure, Ameisensäure, Chloressigsäure, Benzolsulfonsäure, p-Toluolsulfonsäure u.a. In der Regel sind Mengen von 0,1 bis 5 Gew.-% der genannten Säuren, bezogen auf das Gewicht des Polymerisats, ausreichend.

Gemäß Anspruch 1 entstehen unterschiedlich vernetzte Polymerisate, je nachdem ob die beiden zur Vernetzung erforderlichen Arten von reaktiven Seitenketten ursprünglich in den gleichen oder in verschiedenen Polymermolekülen enthalten waren. Im ersten Fall entsteht ein einheitlich vernetztes Polymerisat mit Vernetzungsbrücken, die sich sowohl innerhalb eines ursprünglichen Polymermoleküls als auch zwischen verschiedenen Polymerketten befinden. Sind dagegen die reaktiven Seitenketten jeder Art jeweils nur in verschiedenen Polymermolekülen vorhanden, die getrennt hergestellt und nachträglich vermischt worden sind, so entstehen Vernetzungsbrücken nur zwischen diesen Polymermolekülen. Voraussetzung für eine gleichmäßige Vernetzung ist eine möglichst gleichförmige Vermischung der beiden Polymerisatarten, vorzugsweise in Lösung. Man kann in diesem Falle auch unterschiedlich aufgebaute Polymerisate miteinander vernetzen, wobei allerdings ihre wechselseitige Verträglichkeit beachtet werden muß. Die Unterschiede können beispielsweise in der Art der zugrundeliegenden ethylenisch ungesättigten Monomeren bzw. Comonomeren, in ihren Mengenanteilen, im Molekulargewicht, in der Segmentstruktur von blockförmig zusammengesetzten Polymerisaten oder in anderen Strukturparametern liegen.

Weitere Varianten von Vernetzungen sind grundsätzlich möglich. So kann man ein Polymerisat, das beide Arten von reaktiven Seitenketten enthält, davon eine im Überschuß, mit einem gegebenenfalls anders aufgebauten Polymerisat, das die komplementär reaktive Seitengruppe ausschließlich oder im Überschuß enthält, vernetzen. Dadurch können Vernetzungsbrücken sowohl innerhalb der ursprünglichen Polymermoleküle als auch zwischen den Ausgangspolymeren gebildet werden. Stattdessen können die überschüssigen Seitenketten auch mit einem komplementär reaktiven niedermolekularen Vernetzungsmittel umgesetzt werden.

Das niedermolekulare Vernetzungsmittel enthält in der Regel 2 bis 6 funktionelle Gruppen, die komplementär reaktiv zu den funktionellen Gruppen in den Seitenketten des zu vernetzenden Polymerisats sind. Seine Menge wird nach dem erwünschten Vernetzungsgrad gewählt und soll die stöchiometrische Menge, die sich aus der molaren Menge an vernetzbaren Seitengruppen des Polymerisats, geteilt durch die Zahl der komplementär reaktionsfähigen Gruppen des Vernetzungsmittels ergibt, nicht überschreiten. Ein deutlicher Überschuß des Vernetzungsmittels würde zu verlängerten Seitenketten führen, die keine reaktionsfähigen Gruppen des Polymerisats zur Bildung von Vernetzungsbrücken finden. Bei der Festlegung der Vernetzermenge ist zu bedenken, daß aus sterischen Gründen selten mehr als zwei oder drei funktionelle Gruppen des Vernetzungsmittels zur Reaktion kommen.

Für die Wirkung des Vernetzungsmittels ist sein Molekulargewicht von untergeordneter Bedeutung. Der Begriff "niedermolekular" grenzt die niedermolekularen Vernetzungssysteme von denjenigen ab, bei denen zwei verschiedene Polymere mit komplementär reaktiven Seitengruppen miteinander umgesetzt werden. Unter niedermolekularen Vernetzungsmitteln werden daher diejenigen verstanden, die sich nach ihrer Struktur und Molekülgröße nicht als Polymere mit reaktiven Seitengruppen bezeichnen lassen. Ihr Molekulargewicht liegt in der Regel unter 10 000, vorzugsweise unter 5000, insbesondere unter 1000.

Zur Vernetzung von Polymeren mit geschützten oder ungeschützten Diolgruppen werden Vernetzungsmittel mit wenigstens zwei geschützten oder ungeschützten Carbonylfunktionen eingesetzt. Beispiele sind Glutardialdehyd, Glyoxal und Malondialdehyd-bis-diethylacetal. Zur Vernetzung von Polymeren mit geschützten oder ungeschützten Carbonylgruppen werden Vernetzungsmittel mit wenigstens zwei geschützten oder ungeschützten Diolfunktionen eingesetzt; als solche eignen sich nur solche Polyole, die - wenigstens in der ungeschützten Form - nicht weniger als vier Hydroxylgruppen enthalten, die paarweise in 1,2-Stellung (also an benachbarten C-Atomen) oder in 1,3-Stellung (also mit höchstens einem C-Atom zwischen den OH-tragenden C-Atomen) stehen. Diese Voraussetzung ist bei vielen Zuckeralkoholen erfüllt, wie Mannit, Sorbit, Xylit, Dulcit, Pentaerythrit.

In den meisten Fällen ist die Vernetzung erst dann erwünscht, wenn das Polymerisat bzw, Polymerisatgemisch auf einem Substrat als Überzugsschicht, als Kleber oder als Bindemittel abgeschieden worden ist. Zweckmäßig werden wäßrige oder organische Lösungen oder Dispersionen des vernetzbaren Polymerisats und erforderlichenfalls des Vernetzers mit einem Gehalt an dem sauren Katalysator auf das Substrat aufgebracht bzw. in dieses eingebracht und durch Verflüchtigen der flüssigen Phase in einen Film oder eine Bindermatrix übergeführt. Durch Erwärmen auf 80 bis 180°C, vorzugsweise 100 bis 150°C wird die Vernetzung in einem Zeitraum von einigen Sekunden bis mehreren Stunden, z.B. 10 Sekunden bis 2 Stunden, herbeigeführt. Dabei verlieren die Polymerisate ihre Schmelzbarkeit und Löslichkeit und gewinnen dementsprechend eine erhöhte thermische Belastbarkeit und Beständigkeit gegen organische Lösemittel oder wäßrige Flüssigkeiten.

Zur Herstellung von Überzügen oder von Imprägnierungen flächiger saugfähiger Substrate kann man auch bei einer Temperatur, bei der eine rasche Vernetzung eintritt, die Komponenten mittels einer Mehrstoffdüse auf das Substrat aufsprühen, wo dann Filmbildung und Vernetzung gleichzeitig ablaufen. Dieses Verfahren eignet sich für Systeme, die frei oder arm an Lösungs- und Verteilungsmitteln sind. Eine der Komponenten kann das zu vernetzende Polymerisat, gegebenenfalls zusammen mit Farb- und Füllstoffen, enthalten, die andere das Vernetzungsmittel und/oder den Katalysator.

In den nachfolgenden Beispielen wird das Löslichkeits- und Quellverhalten erfindungsgemäß vernetzter Polymerisate gegenüber Tetrahydrofuran (THF) dargestellt. Im Interesse einer guten Vergleichbarkeit wurden alle Polymerisate aus etwa 55 Gew.-% n-Butylacrylat, etwa 40 Gew.-% Methylmethacrylat und etwa 5 Gew.-% an Monomeren des Vernetzungssystems hergestellt. Als Vergleichsbasis werden der Erfindung je eine Polymerisatlösung (Beispiel L0) und eine Polymerisatdispersion (Beispiel D0), die mittels N-Methylolmethacrylamid und Methacrylamid vernetzt werden und im übrigen aus den gleichen Hauptmonomeren aufgebaut sind, gegenübergestellt.

Bestandteile des Vernetzungssystems

| | |
|---|---|
| V0 | Methacrylamid + N-Methylolmethacrylamid, 1 : 1 Gew.-Tl. |
| V1 | 2,2-Dimethyl-4-(methacryloxymethyl)-1,3-dioxolan |
| V2 | Glutardialdehyd |
| V3 | Malondialdehyd-bis-diethylacetal |
| V4 | 4-Methacryloxybenzaldehyd |
| V5 | 2-Acetoacetoxyethylmethacrylat |
| V6 | 3,3-Diethoxypropylmethacrylat |
| V7 | Glyoxal |
| V8 | 2-Methacryloxypropyl-1,3-dioxolan |
| V9 | Glycerin-monomethacrylat |
| V10 | 2,2-Dimethyl-5-ethyl-5-(acryloxymethyl)-1,3-dioxan |
| V11 | 2,2-Dimethyl-4-(4-methacryloxybutyl)-1,3-dioxolan |
| V12 | 2-Hydroxyethylmethacrylat |

BEISPIELE

Herstellung von Polymerisatlösungen und -filmen und deren Prüfung

Beispiele a bis g

110 Gew.-Tl. n-Butylacrylat, 70-80 Gew.-Tl. Methylmethacrylat, 5 -10 Gew.-Tl. des Vernetzungsmonomers oder je 2,5 - 5 Gew.-Tl. von zwei Bestandteilen des Vernetzersystems wurden gemischt. In einem Reaktor wurden 300 Gew.-Tln. THF und 0,2 Gew.-Tl. Azo-bis-isobutyronitril vorgelegt und zum Sieden erhitzt. Die Monomermischung wurde innerhalb einer Stunde zugetropft und der Ansatz nach Zugabe von weiteren 0,2 Gew.-Tln. Azo-bis-isobutyronitril noch 5 Stunden unter Rückfluß gerührt. Im Rotationsverdampfer wurde die Hälfte des THF abgezogen und das Polymerisat durch Eingießen der verbliebenen Lösung in 2 l Methanol ausgefällt, abgetrennt und 8 Std. im Vakuum bei 80°C getrocknet.

10 Gew.-Tl. des Polymerisats bzw. je 5 Gew.-Tl. von zwei komplementär reaktiven Polymerisaten wurden in 10 - 15 Gew.-Tln. THF gelöst, mit 0,1 Gew.-Tln. p-Toluolsulfonsäure und gegebenenfalls mit der stöchiometrischen Menge des Vernetzungsmittels versetzt. Die Lösungen wurden auf teflonisierte Glasplatten aufgerakelt, zu Filmen eingetrocknet und diese durch Erhitzen auf 120°C während 10 oder 60 min vernetzt. Soweit die Vernetzung bei Raumtemperatur erfolgte, wurden die Filmeigenschaften nach 3 Tagen untersucht.

Zur Prüfung der Vernetzung wurden die Folien vom Untergrund abgezogen, gewogen ($m_1$), 24 Stunden in THF gelagert und nach dem Abtropfen des oberflächlich anhaftenden THF erneut gewogen ($m_2$). Das aufgenommene THF wurde innerhalb 8 Stunden im Vakuumtrockenschrank bei 50°C verflüchtigt und die getrocknete Folie wiederum gewogen ($m_3$).

Als Maß der eingetretenen Vernetzung wurde aus den ermittelten Gewichten

$$\text{der Quellungswert} = (m_2 - m_1) \times 100 / m_1 \; [\%]$$

und

$$\text{der Gewichtsverlust} = (m_1 - m_3) \times 100 / m_1 \; [\%]$$

errechnet. Je niedriger der Quellungswert liegt, um so stärker ist die Vernetzung. Eine hohe Vernetzung kann durch einen scheinbar niedrigen Quellungswert vorgetäuscht werden, wenn unvernetztes Polymermaterial bei der Quellung in THF aus der Probe herausgelöst wird. Daher dürfen nur solche Quellungswerte als Maß für die Vernetzung berücksichtigt werden, die an Proben mit einem Gewichtsverlust unter 10 Gew.-% ermittelt worden sind. In Tabelle I ist zu jeder Härtungszeit der Quellungswert und in Klammern der Gewichtsverlust angegeben.

In den Tabellen I und II werden die Vernetzungssysteme durch Art und Menge (in Gew.-%, bez. auf das Gewicht des Polymerisats) der vernetzungsaktiven Carbonyl- und Diolkomponenten angegeben und die Reaktionstypen in Gruppen a) bis 1) zusammengefaßt.

Tabelle I

| Beispiel Vernetzersystem | | | | | Quellungswert (Gewichtsverlust) | | | | | |
|---|---|---|---|---|---|---|---|---|---|---|
| Nr. | Diol | | Carbonyl | | 3 Tg,25°C | | 10 min,120°C | | 1 Std,120°C | |
| a) Vergleichbasis | | | | | | | | | | |
| L0 | 5% | V0 | - | - | 511 | (11) | 360 | (6) | 186 | (4) |
| b) Umsetzung zweier verschied. Polymerisate mit geschützten Diolgruppen und ungeschützten Carbonylgruppen | | | | | | | | | | |
| b1 | 2,5% | V1 | 2.5% | V4 | 693 | (22) | 673 | (36) | - | - |
| b2 | 2,5 | V1 | 2,5% | V5 | gelöst | | 592 | (4) | 300 | (3) |
| b3 | 5 % | V1 | 5 % | V5 | - | - | 196 | (29) | 200 | (4) |
| c) Umsetzung zweier verschied. Polymerisate mit geschützten Diol- u. Carbonylgruppen | | | | | | | | | | |
| c1 | 2,5% | V1 | 2,5% | V6 | 171 | (0) | 158 | (14) | 45 | (9) |
| c2 | 2,5% | V1 | 2,5% | V8 | 100 | (7) | 150 | (6) | 119 | (0) |
| c3 | 2,5% | V10 | 2,5% | V6 | 332 | (9) | 316 | (9) | 328 | (7) |
| c4 | 2,5% | V11 | 2,5% | V6 | 119 | (2) | 298 | (4) | 343 | (3) |
| d) Vernetzung eines Polymerisats mit geschützten Diolgruppen und ungeschützten Carbonylgruppen | | | | | | | | | | |
| d1 | 2,5% | V1 | 2,5% | V5 | - | - | 213 | (19) | 192 | (11) |
| d2 | 5 % | V1 | 5 % | V5 | - | - | 258 | (19) | 198 | (8) |
| e) Vernetzung eines Polymerisats mit geschützten Diolgruppen und geschützten Carbonylgruppen | | | | | | | | | | |
| e1 | 5 % | V1 | 5 % | V6 | 21 | (4) | 40 | (7) | 87 | (8) |
| e2 | 2,5 | V1 | 2,5 | V8 | 322 | (8) | 314 | (20) | 226 | (19) |
| e3 | 5 % | V1 | 5 % | V8 | 47 | (20) | 42 | (0) | 89 | (1) |
| f) Vernetzung eines Polymerisats mit geschützten Diolgruppen durch Umsetzung mit einem ungesch. Dialdehyd | | | | | | | | | | |
| f1 | 5 % | V1 | 2,5% | V2 | 136 | (25) | 186 | (6) | - | - |
| f2 | 5 % | V10 | 2,5% | V2 | - | - | 542 | (7) | 494 | (4) |
| f3 | 5 % | V11 | 2,5% | V2 | 390 | (2) | 406 | (12) | 351 | (3) |
| g) Vernetzung eines Polymerisats mit geschützten Diolgruppen durch Umsetzung mit einem geschützt. Dialdehyd | | | | | | | | | | |
| g1 | 5 % | V1 | 5 % | V3 | - | - | 930 | (8) | 646 | (7) |
| Vergleich: Vernetzung eines Polymerisats mit ungeschützten Hydroxylgruppen und geschützten Carbonylgruppen | | | | | | | | | | |
| L1 | 2,5% | V12 | 2,5% | V6 | 1053 | (29) | 698 | (17) | gelöst | |
| Vergleich: Vernetzung eines Polymerisats mit ungeschützten Hydroxylgruppen mit einem ungeschützten Dialdehyd | | | | | | | | | | |
| L2 | 5 % | V12 | 2,5% | V2 | 338 | (6) | 372 | (6) | 1127 | (14) |

Herstellung von Polymerisatdispersionen und -filmen und deren Prüfung

Beispiele h bis m

In einem mit Rührer, Tropftrichter und Rückflußkühler ausgerüsteten Reaktionsgefäß wurden jeweils 40 Gew.-Tl. Wasser auf 80°C erhitzt und mit 0,2 Gew.-Tln. eines Emulgators (Na-Salz eines sulfatierten Addukts von 7 Mol Ethylenoxid an 1 Mol Triisobutylphenol) sowie 0,04 Gew.-Tln. Ammoniumperoxodisulfat versetzt. Hierzu wurde inerhalb 4 Stunden eine Emulsion von 100 Gew.-Tln. eines Monomerengemisches in 61,5 Gew.-Tln. Wasser mit 1,5 Gew.-Tln. des genannten Emulgators zugetropft. Die Monomerengemische enthielten jeweils 55 Gew.-Tle. Butylacrylat, die in

Tabelle II angegebenen Anteile an Vernetzungskomponenten und zum verbleibenden Teil Methylmethacrylat. Zur Nachpolymerisation wurden die Ansätze noch 2 Stunden bei 80°C gehalten. Es entstanden stabile, koagulatfreie Dispersionen mit Feststoffgehalten von 50 Gew.-%.

Zur Herstellung von Polymerisatfilmen wurden die erhaltenen Dispersionen jeweils mit 0,25 Gew.-Tln. p-Toluolsulfonsäure als Katalysator versetzt, auf einer Glasplatte zu einem Film ausgegossen und 18 Stunden bei 40 bis 50°C getrocknet. Dann wurde der Film abgezogen und geteilt. Jeweils eine Hälfte wurde 15 min bei 140°C, die andere 18 Std. bei 40°C gehärtet. Die Vernetzung wurde wie bei den Beispielen a bis g durch Quellung in THF geprüft.

In Tabelle II ist zu jeder Härtungszeit der Quellungswert (prozentuale Gewichtszunahme in THF) und in Klammern der Gewichtsverlust (prozentuale Gewichtsabnahme nach Lagerung in THF und Trocknung) angegeben.

Tabelle II -

| Emulsionspolymerisate | | | | | | | | |
|---|---|---|---|---|---|---|---|---|
| Beispiel Vernetzersystem | | | | | Quellungswert (Gewichtsverlust) | | | |
| Nr. | Diol | | Carbonyl | | 15 min,140°C | | 18 Std,40°C | |
| h) Vergleichbasis | | | | | | | | |
| D0 | 7 % | V0 | - | | 102 | (4,2) | 204 | (6) |
| i) Vernetzung eines Polymerisats mit ungeschüzten Diol- und Carbonylgruppen | | | | | | | | |
| i1 | 5 % | V9 | 5 % | V5 | 332 | (10) | 889 | (17) |
| j) Vernetzung eines Polymerisats mit geschützten Diol- und ungeschützten Carbonylgruppen | | | | | | | | |
| j1 | 5 % | V1 | 7,5% | V4 | 165 | (6) | 203 | (10) |
| j2 | 5 % | V1 | 5 % | V5 | 326 | (7) | 1200 | (20) |
| k) Vernetzung eines Polymerisats mit ungeschützten Diolgruppen durch Umsetzung mit einem ungesch. Dialdehyd | | | | | | | | |
| k1 | 5 % | V9 | 5 % | V2 | 291 | (6) | 290 | (9) |
| l) Vernetzung eines Polymerisats mit geschützten Diolgruppen durch Umsetzung mit einem ungeschützten Dialdehyd | | | | | | | | |
| l1 | 5 % | V1 | 5 % | V2 | 271 | (6) | 238 | (7) |
| l2 | 5 % | V1 | 5 % | V7 | 305 | (6) | 676 | (10) |
| m) Vernetzung eines Polymerisats mit geschützten Diol- und Carbonylgruppen | | | | | | | | |
| m1 | 5 % | V1 | 8,7% | V6 | 214 | (6) | 170 | (9) |

## Patentansprüche

1. Vernetztes Polymerisat, erhältlich durch intermolekulare Vernetzung zwischen Polymermolekülketten unter Ausbildung von 1,3-Dioxan- oder 1,3-Dioxolan-Gruppen, bestehend aus äthylenisch ungesättigten, radikalisch polymerisierbaren Monomeren und Monomeren mit seitenständigen, gegebenenfalls geschützten Carbonylgruppen und/oder Monomeren mit seitenständigen, gegebenenfalls geschützten 1,2- oder 1,3-Diolgruppen; gegebenenfalls unter Verwendung niedermolekularer, wenigstens difunktioneller Vernetzungsmittel, wobei das vernetzte Polymerisat aus der Vernetzung eines Polymerisats hervorgegangen ist, bei dem die seitenständige Carbonylgruppe und die seitenständige Diolgruppe Bestandteile des gleichen Polymerisats sind oder auch aus einem Gemisch verschieden zusammengesetzter Polymerisate bestehen kann,
   dadurch gekennzeichnet, daß
   als Monomere mit seitenständigen, gegebenenfalls geschützten 1,2- oder 1,3-Diolgruppen Ester der Acryl- oder Methacrylsäure der Struktur

$$CH_2=C(R'')-C(O)-O-(CH_2)_z-CH(OH)-CH_2-OH$$

oder deren mit Aceton gebildete Ketale

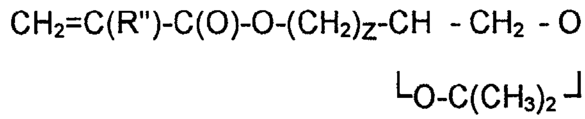

worin z = 1 - 4 und R" = H oder $CH_3$ ist
oder

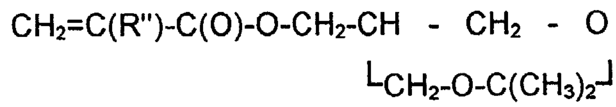

und als Monomere mit seitenständigen, gegebenenfalls geschützten Carbonylgruppen äthylenisch ungesättigte, radikalisch polymerisierbare Monomere mit Carbonylgruppen der Struktur

$$CH_2=C(R)-B-C(O)-R$$

oder in geschützter Form folgender Struktur

$$CH_2=C(R)-B-C(OR')_2-R$$

verwendet werden, worin R ein Wasserstoffatom oder ein gegebenenfalls substituierter Kohlenwasserstoffrest, B ein zweiwertiger organischer Rest und R' niedere Alkylreste oder zusammengenommen eine Alkylengruppe bedeuten und daß die Anteile der ungesättigten Monomeren mit Diol- und mit Carbonylseitenketten von jeweils etwa 1 bis 20 Gew.-%, bezogen auf das Polymerisatgewicht betragen.

**2.** Vernetztes Polymerisat nach Anspruch 1, dadurch gekennzeichnet, daß die Carbonylgruppen als gegebenenfalls geschützte Aldehydgruppen eingesetzt werden.

**3.** Vernetztes Polymerisat nach Anspruch 1 oder 2, dadurch gekennzeichnet, daß die Carbonylgruppen als Dialkylacetale oder als Dioxolane eingesetzt werden.

**4.** Vernetztes Polymerisat nach einem oder mehreren der Ansprüche 1 bis 3, dadurch gekennzeichnet, daß die Carbonylgruppe über einen aliphatischen Rest an das Polymerisat gebunden ist.

**5.** Verwendung der vernetzten Polymerisate bzw. Polymerisatgemische nach einem oder mehreren der Ansprüche 1 bis 4 zur Herstellung von Überzugsschichten auf Substraten.

**6.** Verwendung der vernetzten Polymerisate bzw. Polymerisatgemische nach einem oder mehreren der Ansprüche 1 bis 4 zur Herstellung von Klebern auf Substraten.

**7.** Verwendung der vernetzten Polymerisate bzw. Polymerisatgemische nach einem oder mehreren der Ansprüche 1 bis 4 zur Herstellung von Überzügen oder Imprägnierungen flächiger saugfähiger Substrate.

**Claims**

**1.** Crosslinked polymer obtainable by intermolecular crosslinking between polymer molecule chains, with the formation of 1,3-dioxan or 1,3-dioxolan groups, consisting of ethylenically unsaturated, radically polymerisable monomers and monomers with lateral, optionally protected carbonyl groups and/or monomers with lateral, optionally protected 1,2- or 1,3-diol groups, optionally using low molecular, at least difunctional crosslinking agents, the crosslinked polymer arising from the crosslinking of a polymer wherein the lateral carbonyl group and the lateral

diol group are components of the same polymer or may consist of a mixture of polymers of different compositions, characterised in that the monomers with lateral, optionally protected 1,2- or 1,3-diol groups used are esters of acrylic or methacrylic acid of the structure

$$CH_2=C(R'')-C(O)-O-(CH_2)_z-CH(OH)-CH_2-OH$$

or the ketals thereof formed with acetone,

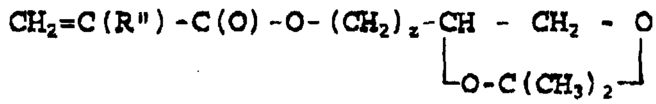

wherein z = 1 - 4 and R" = H or $CH_3$,
or

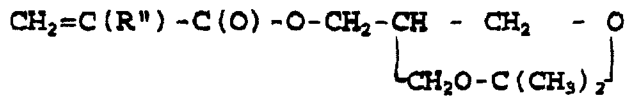

and the monomers with lateral, optionally protected carbonyl groups used are ethylenically unsaturated, radically polymerisable monomers with carbonyl groups of the structure

$$CH_2=C(R)-B-C(O)-R$$

or in the protected form of the following structure

$$CH_2=C(R)-B-C(OR')_2-R$$

wherein R is a hydrogen atom or an optionally substituted hydrocarbon group, B is a divalent organic group and R' denotes lower alkyl groups or, taken together, an alkylene group and the proportions of the unsaturated monomers with diol and with carbonyl side chains each constitute about 1 to 20% by weight, based on the weight of the polymer.

**2.** Crosslinked polymer according to claim 1, characterised in that the carbonyl groups are used as optionally protected aldehyde groups.

**3.** Crosslinked polymer according to claim 1 or 2, characterised in that the carbonyl groups are used as dialkyl acetals or as dioxolanes.

**4.** Crosslinked polymer according to one or more of claims 1 to 3, characterised in that the carbonyl group is bound to the polymer via an aliphatic group.

**5.** Use of the crosslinked polymers or polymer mixtures according to one or more of claims 1 to 4 for preparing coating layers on substrates.

**6.** Use of the crosslinked polymers or polymer mixtures according to one or more of claims 1 to 4 for preparing adhesives on substrates.

**7.** Use of the crosslinked polymers or polymer mixtures according to one or more of claims 1 to 4 for preparing coatings or impregnations of flat absorbent substrates.

**Revendications**

1. Polymère réticulé que l'on peut obtenir par réticulation intermoléculaire entre des chaînes de molécules de polymères avec formation de groupes 1,3-dioxanne ou 1,3-dioxolane, constitué de monomères éthyléniquement insaturés, polymérisables par voie radicalaire et de monomères ayant des groupes carboxyle en position latérale, éventuellement protégés, et/ou de monomères ayant des groupes 1,2- ou 1,3-diol en position latérale, éventuellement protégés, le cas échéant avec utilisation d'agents réticulants de faible poids moléculaire, au moins bifonctionnels, le polymère réticulé provenant de la réticulation d'un polymère dans lequel le groupe carbonyle en position latérale et le groupe diol en position latérale sont des composants du même polymère ou encore peuvent être constitués d'un mélange de divers polymères rassemblés,
caractérisé en ce qu'
on utilise comme monomères ayant des groupes 1,2- ou 1,3-diol en position latérale, éventuellement protégés, des esters de l'acide acrylique ou de l'acide méthacrylique de structure

$$CH_2=C(R")-C(O)-O-(CH_2)_z-CH(OH)-CH_2-OH$$

ou leurs cétals formés avec l'acétone

$$CH_2=C(R")-C(O)-O-(CH_2)_z-CH\ -\ CH_2\ -\ O$$
$$\lfloor O-C(CH_3)_2 \rfloor$$

où $z = 1\text{-}4$ et $R" = H$ ou $CH_3$
ou

$$CH_2=C(R")-C(O)-O-CH_2-CH\ -\ CH_2\ -\ O$$
$$\lfloor CH_2-O-C(CH_3)_2 \rfloor$$

et comme monomères à groupes carbonyle en position latérale, éventuellement protégés, des monomères éthyléniquement insaturés, polymérisables par voie radicalaire, avec des groupes carbonyle de structure

$$CH_2=C(R)-B-C(O)-R$$

ou sous forme protégée de structure suivante

$$CH_2=C(R)-B-C(OR')_2-R$$

- où R est un atome d'hydrogène ou un radical hydrocarboné éventuellement substitué, B est un radical organique bivalent et R' représente des radicaux alkyle inférieur ou, lorsqu'ils sont pris ensemble, représentent un groupe alkylène et
- la proportion des monomères insaturés ayant des chaînes latérales diol et carbonyle est à chaque fois d'environ 1 à 20% en poids, par rapport au poids du polymère.

2. Polymère réticulé selon la revendication 1,
caractérisé en ce que
les groupes carbonyle sont utilisés sous forme de groupes aldéhyde éventuellement protégés.

3. Polymère réticulé selon la revendication 1 ou 2,
caractérisé en ce que
les groupes carbonyle sont utilisés sous forme de dialkylacétals ou sous forme de dioxolanes.

4. Polymère réticulé selon une ou plusieurs des revendications 1 à 3,

caractérisé en ce que
le groupe carbonyle est lié au polymère par l'intermédiaire d'un radical aliphatique.

**5.** Utilisation des polymères ou selon les cas des mélanges de polymères réticulés selon une ou plusieurs des revendications 1 à 4 pour fabriquer des couches de revêtement sur des substrats.

**6.** Utilisation des polymères ou selon les cas des mélanges de polymères réticulés selon une ou plusieurs des revendications 1 à 4 pour la production d'adhésifs sur des substrats.

**7.** Utilisation des polymères ou selon les cas des mélanges de polymères réticulés selon une ou plusieurs des revendications 1 à 4 pour la fabrication de revêtements ou l'imprégnation de substrats absorbants minces.